# EUROPEAN PATENT APPLICATION

(11) **EP 4 618 170 A1**
(43) Date of publication of application: **17.09.2025**
(21) Application number: 24852445.6
(22) Date of filing: 06.08.2024
(51) Int. Cl.: H01M 4/04, B65H 23/04, B65H 35/06, B65H 18/10, B65H 43/04

(54) **SECONDARY BATTERY MANUFACTURING DEVICE AND METHOD FOR MANUFACTURING SECONDARY BATTERY THEREBY**

(30) Priority: 08.08.2023 KR 20230103309
(71) Applicant: LG Energy Solution, Ltd., Seoul 07335 (KR)
(72) Inventor: KIM, Geon Woo, Daejeon 34122 (KR); PARK, Jin Hui, Daejeon 34122 (KR); YOON, Tae Gyun, Daejeon 34122 (KR); SHIN, Gi Chang, Daejeon 34122 (KR); SEOL, Jeong Soo, Daejeon 34122 (KR)
(74) Representative: BCKIP Part mbB
(86) International application number: PCT/KR2024/095989
(87) International publication number: WO 2025/034092

(57) **Abstract**

Exemplary embodiments of the present technology provide a secondary battery manufacturing apparatus. The secondary battery manufacturing apparatus includes a dancer roll configured to change the path of travelling of an electrode sheet; a cutter configured to cut the electrode sheet adjacent to the dancer roll into first and second electrode sheets; and a discarded portion winder configured to wind defective portions of the first electrode sheet.

## Description

### [Technical Field]

The present invention relates to a secondary battery manufacturing apparatus and a secondary battery manufacturing method using the same. The present application claims the benefit of priority based on Korean Patent Application No. 10-2023-0103309, filed on August 8, 2023, and the entire contents of the Korean patent application is incorporated herein by reference.

### [Background Art]

Secondary batteries can be charged and discharged a plurality of times unlike primary batteries. Secondary batteries have been widely used as energy sources for various types of wireless devices such as handsets, laptop computers, and cordless vacuum cleaners. Recently, a main use of secondary batteries is moving from mobile devices to mobility, as manufacturing costs per unit capacity of secondary batteries drastically decrease due to improved energy density and economies of scale and a range of battery electric vehicles (BEVs) increases to the same level as fuel vehicles.

A secondary battery is manufactured by an electrode process, an assembly process, and an activation process. Among these processes, the electrode process is a key process in determining the yield and performance of a battery cell. The electrode process may include a coating process, a roll press process, and a slitting process. In the coating process, an active material and an insulating material may be applied to a surface of a current collector. In the roll press process, an electrode may be pressed by pressing rolls. In the roll press process, a density, performance and surface quality of the electrode may be determined. In the slitting process, the electrode may be cut into a plurality of electrodes according to the design of battery cells.

### [Disclosure]

### [Technical Problem]

The present invention is directed to providing a secondary battery manufacturing apparatus with improved productivity and a secondary battery manufacturing method using the same.

### [Technical Solution]

Embodiments of the present invention provide a secondary battery manufacturing apparatus. The secondary battery manufacturing apparatus includes a dancer roll configured to change a driving path of an electrode sheet, a cutter configured to cut the electrode sheet adjacent to the dancer roll into first and second electrode sheets, and a scrap winder configured to wind a defective part of the first electrode sheet.

The dancer roll may be configured to be moved in a direction perpendicular to a moving direction of the electrode sheet.

The dancer roll may be configured to be moved in a direction perpendicular to a transverse direction of the electrode sheet.

The dancer roll may change a path of the electrode sheet while tension of the electrode sheet is maintained.

The secondary battery manufacturing apparatus may further include a nip bar configured to fix the electrode sheet.

The dancer roll may be below the electrode sheet, and the driving path of the electrode sheet may be extended by the dancer roll.

The dancer roll may be on the electrode sheet, and the driving path of the electrode sheet may be extended by the dancer roll.

The secondary battery manufacturing apparatus may further include a tape attacher configured to connect the first electrode sheet and the second electrode sheet.

Exemplary embodiments provide a secondary battery manufacturing method. The secondary battery manufacturing method includes: moving a dancer roll to change a driving path of an electrode sheet, in which the electrode sheet is unwound from a first electrode roll by an unwinder and wound into a second electrode roll by a rewinder; cutting the electrode sheet to separate it into first and second electrode sheets, in which the first electrode sheet is connected to the first electrode roll and the second electrode sheet is connected to the second electrode roll; and winding a defective part of the first electrode sheet to scrap the defective part of the first electrode sheet.

The driving path of the electrode sheet may be extended through the moving of the dancer roll.

The electrode sheet may be unwound from the electrode roll during movement of the dancer roll.

The secondary battery manufacturing method may further include fixing the electrode sheet by a nip bar before the cutting of the electrode sheet.

The unwinding of the electrode sheet from the **first** electrode roll may be stopped before the fixing of the electrode sheet by the nip bar.

The secondary battery manufacturing method may further include connecting the first electrode sheet and the second electrode sheet to reconnect the electrode sheet.

The secondary battery manufacturing method may further include recovering a driving path of the reconnected electrode sheet.

The dancer roll may be moved from a standby position to a work position to change the driving path of the electrode sheet, and moved from the work position to the standby position to change a driving path of the reconnected electrode sheet.

### [Advantageous Effects]

According to exemplary embodiments of the present invention, a defective part of an electrode sheet can be removed by automated equipment without an operator's intervention. Accordingly, the operator's safety can be ensured, and the reliability and productivity of the manufacture of a secondary battery can be improved.

Effects achievable from exemplary embodiments of the present invention are not limited to the above-described effects, and other effects that are not described herein will be clearly derived and understood by those of ordinary skilled in the art to which the exemplary embodiments of the present invention pertain from the following description. That is, unintended effects achieved when the exemplary embodiments of the present invention are implemented are derivable by those of ordinary skilled in the art from the exemplary embodiments of the present invention.

### [Brief Description of the Drawings]

FIG. 1 illustrates a secondary battery manufacturing apparatus according to exemplary embodiments.
FIG. 2 is a flowchart of a secondary battery manufacturing method according to exemplary embodiments.
FIGS. 3 to 7 are diagrams for describing a secondary battery manufacturing method according to exemplary embodiments.
FIG. 8 illustrates a secondary battery manufacturing apparatus according to exemplary embodiments.

### [Best Mode]

Hereinafter, embodiments of the present invention will be described in detail with reference to the accompanying drawings. Before describing embodiments of the present invention, the terms or expressions used in the present specification and claims should not be construed as being limited to as generally understood or as defined in commonly used dictionaries, and should be understood according to meanings and concepts corresponding to the present invention on the basis of the principle that the inventor(s) of the application can appropriately define the terms or expressions to optimally explain the present invention.

Therefore, embodiments set forth herein and configurations illustrated in the drawings are only examples of the present invention and do not reflect all the technical ideas of the present invention and thus it should be understood that various equivalents and modifications that replace the configurations would have been made at the filing date of the present application.

Well-known configurations or functions related to describing the present invention are not described in detail when it is determined that they would obscure the subject matter of the present invention due to unnecessary detail.

Because embodiments of the present invention are provided to more fully explain the present invention to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

### (First Embodiment: Secondary Battery Manufacturing Apparatus)

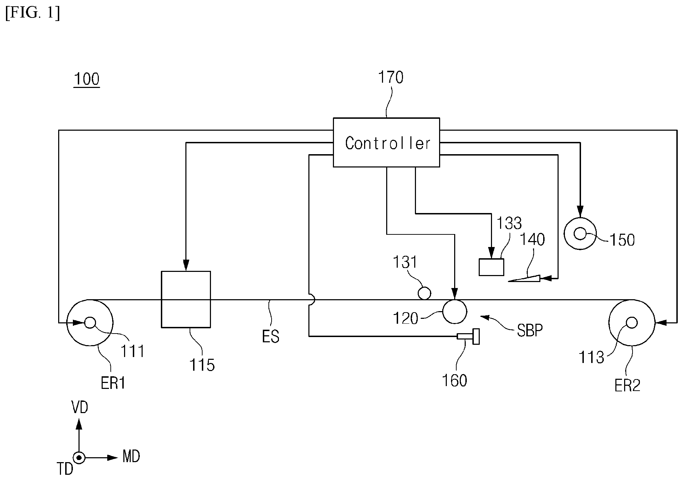

FIG. 1 illustrates a secondary battery manufacturing apparatus 100 according to exemplary embodiments.

Referring to FIG. 1, the secondary battery manufacturing apparatus 100 may include an unwinder 111, a rewinder 113, a processing mechanism 115, a dancer roll 120, a guide roll 131, a nip bar 133, a cutter 140, a scrap winder 150, a tape attacher 160, and a controller 170.

The secondary battery manufacturing apparatus 100 may be configured to perform a process of manufacturing a secondary battery. In the secondary battery manufacturing apparatus 100, an electrode process may be performed on an electrode sheet ES unwound from a first electrode roll ER1 by the unwinder 111, and the electrode sheet ES may be wound into a second electrode roll ER2 by the rewinder 113. Accordingly, the electrode process may be a roll-to-roll process.

Hereinafter, a moving direction (or longitudinal direction) of the electrode sheet ES is referred to as a machine direction MD, and a direction parallel to the electrode sheet ES and perpendicular to the machine direction MD is referred to as a transverse direction TD. The transverse direction TD may be a width direction of the electrode sheet ES. A direction perpendicular to each of the machine direction MD and the transverse direction TD is referred to as a vertical direction VD.

The electrode sheet ES may be processed by the processing mechanism 115. For example, the processing mechanism 115 may include a die coater, and the electrode sheet ES may be coated with an electrode slurry. As another example, the processing mechanism 115 may include pressing rolls, and the roll pressing process may be performed on the electrode sheet ES coated with the electrode slurry. As another example, the processing mechanism 115 may include a splicing die and a scrap port, and a part of the electrode sheet ES may be scrapped. As another example, the processing mechanism 115 may include a slitter, and the electrode sheet ES may be divided into a plurality of electrode sheets each having a smaller width.

The coating process is a process of applying a coating material such as the electrode slurry to the electrode sheet ES. The electrode slurry may include an electrode active material, a conductive agent, a binder, and a solvent. The electrode slurry may be provided by dissolving the electrode active material, the conductive additive, the binder, etc. in the solvent. In the coating process, a boundary of a coated lane of the electrode sheet ES may further be coated with an insulating layer. Here, the coated lane is a part of the electrode sheet ES coated with the electrode slurry.

The roll pressing process is a process of passing the electrode sheet ES, which is coated with the electrode slurry, between pressing rolls facing each other. By using the pressing rolls, a surface of an electrode may be planarized and a bonding force between the active material and a current collector may be increased.

The coating process and the roll pressing process are performed on the electrode sheet ES having a broad width to enhance the production (e.g., GWh) per line of secondary battery production equipment. Thereafter, in the slitting process, the electrode sheet ES having the broad width may be cut according to the specifications of a battery cell. The slitting process is an optional process and thus may be omitted according to the standards of a battery cell to be finally manufactured.

The dancer roll 120 may be configured to change a driving path of the electrode sheet ES. When the electrode sheet ES includes a defective part, the dancer roll 120 may change a path of the electrode sheet ES to easily remove the defective part. The dancer roll 120 may be configured to move in the vertical direction VD. For example, the dancer roll 120 disposed below the electrode sheet ES may push the electrode sheet ES upward. The dancer roll 120 may be moved in the machine direction MD and the transverse direction TD to control the maintenance of equipment and a change of the driving path of the electrode sheet ES.

Here, the terms "on" and "below" are relative concepts, and unless otherwise defined, a direction away from a bottom surface of a site on which the secondary battery manufacturing apparatus 100 is installed is defined as an upward direction, and a direction closer to the bottom surface of the site on which the battery manufacturing apparatus 100 is installed is defined as a downward direction. It should be understood that a first element is closer to the bottom surface of the site on which the secondary battery manufacturing apparatus 100 is installed than a second element when the first element is below the second element.

By moving the dancer roll 120, the electrode sheet ES may be pushed by the dancer roll 120 to be moved in a state in which tension is maintained. That is, while the dancer roll 120 is moving, the unwinding of the electrode sheet by the unwinder 111 and the winding of the electrode sheet by the rewinder 113 may continue.

The guide roll 131 may define a moving path of the electrode sheet ES. Although not shown in detail, the secondary battery manufacturing apparatus 100 may include additional guide rolls for defining a moving path of the electrode sheet ES. By arranging the additional guide rolls, a driving path of the electrode sheet ES may be designed and tension of the electrode sheet ES may be maintained during processing of the electrode sheet ES.

The nip bar 133 may be configured to press the electrode sheet ES so that the electrode sheet ES may be fixed. The nip bar 133 may be configured to move three-dimensionally, including the vertical direction VD, with respect to the electrode sheet ES. The nip bar 133 may press the electrode sheet ES after the driving of the electrode sheet ES is stopped.

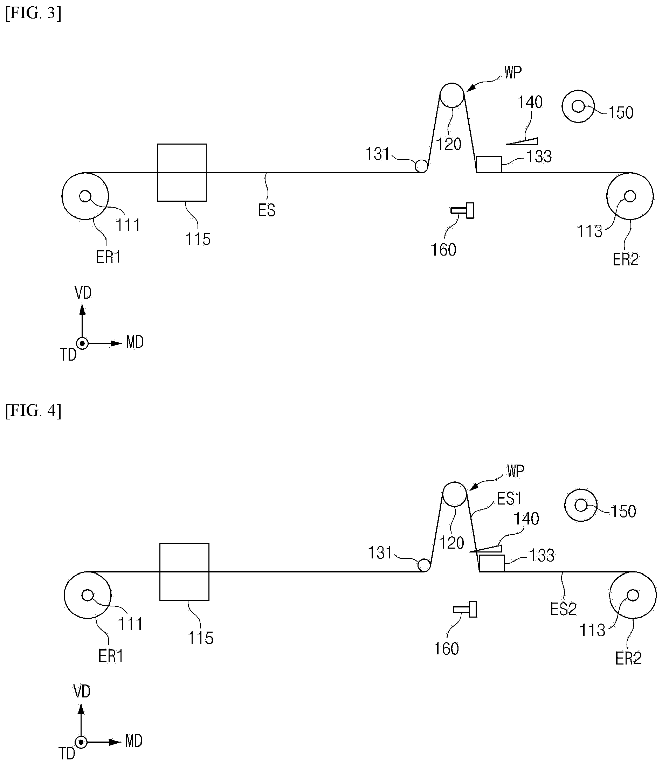

The cutter 140 may be configured to cut the electrode sheet ES. The electrode sheet ES may be cut into a first electrode sheet ES1 (see FIG. 4) and a second electrode sheet ES2 (see FIG. 4) by the cutter 140. The cutter 140 may cut, for example, a part of the electrode sheet ES between the nip bar 133 and the dancer roll 120.

The scrap winder 150 may be configured to wind a defective part of the first electrode sheet ES1 (see FIG. 4) to scrap the defective part of the first electrode sheet ES1.

The tape attacher 160 may be configured to attach a joint (e.g., a tape) to the first electrode sheet ES1 (see FIG. 4) and the second electrode sheet ES2 (see FIG. 4) to connect the first electrode sheet ES1 and the second electrode sheet ES2.

The controller 170 may be configured to control operations of the unwinder 111, the rewinder 113, the processing mechanism 115, the dancer roll 120, the nip bar 133, the cutter 140, the scrap winder 150, and the tape attacher 160. The controller 170 may be a programmable logic controller (PLC). A PLC is a special type of microprocessor-based controller that stores instructions using a programmable memory and implements functions such as logic, sequencing, timing, counting and arithmetic operations to control machines and processes. It is easy to operate and program the PLC.

The secondary battery manufacturing apparatus 100 may include a first rotary encoder configured to detect an input amount of the electrode sheet ES based on the amount of rotation of the unwinder 111, and a second rotary encoder configured to detect an exhaustion amount of the electrode sheet ES based on the amount of rotation of the rewinder 113. The first rotary encoder may be configured to generate an input amount signal and transmit the input amount signal to the controller 170. The second rotary encoder may be configured to generate an exhaustion amount signal and transmit the exhaustion amount signal to the controller 170.

The controller 170 may be configured to receive the input amount signal and the exhaustion amount signal from the rotary encoders. The controller 170 may include defect data collected from an inspector. The defect data may include a value indicating a defect and coordinates matching the defect. The controller 170 may control the elements of the secondary battery manufacturing apparatus 100 based on a moving distance of the electrode sheet ES. For example, the controller 170 may be configured to generate a signal for moving the dancer roll 120 when a defective part of the electrode sheet ES approaches the dancer roll 120.

The secondary battery manufacturing apparatus 100 may further include a measuring device and an inspector. Defect data indicating a defect of the electrode sheet ES may be collected by the measuring device and the inspector. The defect of the electrode sheet ES may be determined by an inspector and a measuring device in a current process (i.e., the inspector and the measuring device included in the secondary battery manufacturing apparatus 100) or may be a defect identified in a previous process.

The measuring device and the inspector may each include a sensing part and a processor. The sensing part may be configured to generate a measurement signal or an inspection signal. The sensing part may include a time delay and integration (TDI) camera, a component metal oxide semiconductor (CMOS) image sensor, and a time of flight (TOF) sensor. The sensing part may include an emitter and a receiver that are configured to perform measurement using nondestructive signals such as ultrasound waves, microwaves, terahertz waves, or infrared rays. The sensing part may include analog and/or digital sensors, such as a color sensor, a biosensor, a chemical sensor, a composition sensor, a current and/or power meter, an air quality sensor, a gas sensor, a hall effect sensor, a brightness level sensor, and an optical sensor. The sensing part may include a pressure sensor, a temperature sensor, an ultrasonic sensor, a proximity sensor, a door state sensor, a motion tracking sensor, a humidity sensor, a visible light and infrared sensor, a camera, etc. In some cases, the inspector may include only the sensing part.

The measuring device may be configured to collect measurement data, and the inspector may be configured to collect inspection data. Raw measurement data may include a profile of a physical quantity based on a scanning result. For example, the measurement data may include thickness data and loading amount data of a coating material on the electrode sheet ES. As a non-limiting example, the measuring device may include a web gauge of Thermofisher Scientific and a thickness meter. A judgement value indicating a defect of the electrode sheet ES may be determined by performing an operation (e.g., a comparison operation) on the measurement data and a range indicating a normal value.

For example, when an amount of the measured coating material on the electrode sheet ES (e.g., a loading amount on the electrode sheet ES or a thickness of the electrode sheet ES) is in a set range including upper and lower limits, a corresponding part of the electrode sheet ES may be determined as a good-quality part. The corresponding part of the electrode sheet ES may be determined as defective, when the amount of the measured coating material on the electrode sheet ES (e.g., the loading amount on the electrode sheet ES or the thickness of the electrode sheet ES) is less than the lower limit or greater than the upper limit.

As another example, a measured value (or representative value) within a first range may be determined as normal, a measured value (or representative value) within a second range greater than the first range may be determined as excessive, and a measured value (or representative value) within a third range smaller than the first range may be determined as insufficient.

The inspection data may include data of a judgement of the quality of a part of the electrode sheet and a process event. For example, the inspection data may include data about the appearance of the electrode sheet collected by an image-based inspection device such as a vision machine, size data such as a width of an insulating material on the coating material and an overlapping width between the coating material and the insulating material, mismatching data between coated lanes on an upper surface of the electrode sheet and coated lanes on a lower surface of the electrode sheet, data about disconnections and joints on the electrode sheet, data about a part of the electrode sheet on which sampling inspection is performed, data about a part of the electrode sheet ES to be scrapped, data about a scrap part of the electrode sheet ES, data about whether the coating material and the insulating material on the electrode sheet ES are defective or not, data about datum points indicating a position of the electrode sheet, and defect data such as a pinhole defect, a crater defect, a line defect, a crack defect, a side ring defect, an island defect, a folded defect, a wrinkle defect, a pit defect, and a scratch defect. The datum points may be formed on the electrode sheet at certain intervals, and other elements on the electrode sheet may be located based on the datum points. The inspector may be a color sensor, a joint sensor, a datum point sensor, or a vision machine.

### (Second Embodiment: Manufacturing Method)

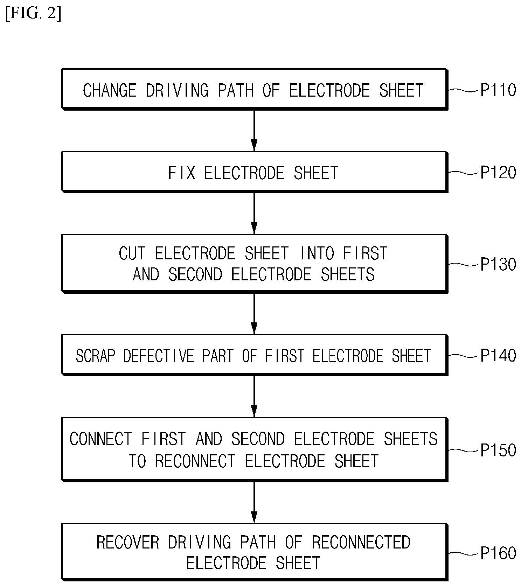

FIG. 2 is a flowchart of a secondary battery manufacturing method according to exemplary embodiments.

FIGS. 3 to 7 are diagrams for describing a secondary battery manufacturing method according to exemplary embodiments.

Referring to FIGS. 2 and 3, in P110, a driving path of an electrode sheet ES may be changed. As a dancer roll 120 is moved from a standby position SBP (see FIG. 1) to a work position WP, the driving path of the electrode sheet ES may be changed. By changing the driving path of the electrode sheet ES, the driving path of the electrode sheet ES may be extended and thus the electrode sheet ES may be easily cut by a knife and a cut part of the electrode sheet Es may be easily wound.

In the present example, the dancer roll 120 may be raised to change the driving path of the electrode sheet ES and a part of the electrode sheet ES may be moved upward as the electrode sheet ES is pushed by the dancer roll 120. In P110, the dancer roll 120 may be moved while the electrode sheet ES is driven. That is, during the movement of the dancer roll 120, the electrode sheet ES may be unwound from a first electrode roll ER1 by an unwinder 111 and wound into a second electrode roll ER2 by a rewinder 113.

Next, in P120, the electrode sheet ES may be fixed. To fix the electrode sheet ES, a nip bar 133 may be moved to a position at which the electrode sheet ES is to be fixed. The nip bar 133 fixes the electrode sheet ES and thus the driving of the electrode sheet ES may be stopped before the nip bar 133 presses the electrode sheet ES. That is, before the electrode sheet ES is fixed by the nip bar 133, the unwinding of the electrode sheet ES by the unwinder 111 and the winding of the electrode sheet ES by the rewinder 113 may be stopped.

Referring to FIGS. 2 and 4, in P130, the electrode sheet ES may be cut into first and second electrode sheets ES1 and ES2. The first electrode sheet ES1 may be connected to the first electrode roll ER1. The second electrode sheet ES2 may be connected to the second electrode roll ER2. The first and second electrode sheets ES1 and ES2 may be separated from each other in the machine direction MD (or the longitudinal direction). The first electrode sheet ES1 may include a defective part.

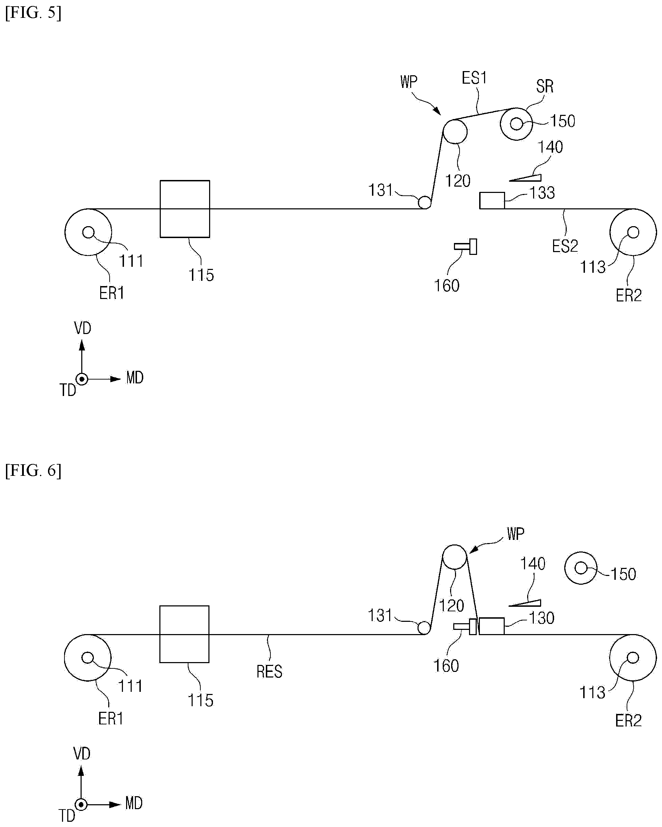

Referring to FIGS. 2 and 5, in P140, the defective part of the first electrode sheet ES1 may be scrapped. To scrap the defective part of the first electrode sheet ES1, a scrap winder 150 may access the dancer roll 120 or the first electrode sheet ES1. To scrap the defective part of the first electrode sheet ES1, the defective part of the first electrode sheet ES1 may be wound by the scrap winder 150. The scrap winder 150 may wind the first electrode sheet ES1 with an amount of rotation sufficient to wind the defective part of the first electrode sheet ES1 based on a known position of the defective part of the first electrode sheet ES1. To scrap the defective part of the first electrode sheet ES1, the scrap winder 150 may be controlled by a controller 170 (see FIG. 1).

Referring to FIGS. 2 and 6, in P150, the first and second electrode sheets ES1 and ES2 may be connected to provide a reconnected electrode sheet RES. The first and second electrode sheets ES1 and ES2 may be connected to each other by a tape attacher 160. Accordingly, the connection of the first and second electrode sheets ES1 and ES2 may also be automated, and an operator's intervention may be excluded from the scrapping of the defective part of the electrode sheet ES (see FIG. 1) to the reconnection of the electrode sheet ES.

Referring to FIGS. 2, 6 and 7, in P160, a driving path of the reconnected electrode sheet RES may be recovered. To recover the driving path of the reconnected electrode sheet RES, the dancer roll 120 may be moved from the work position WP to the standby position SBP.

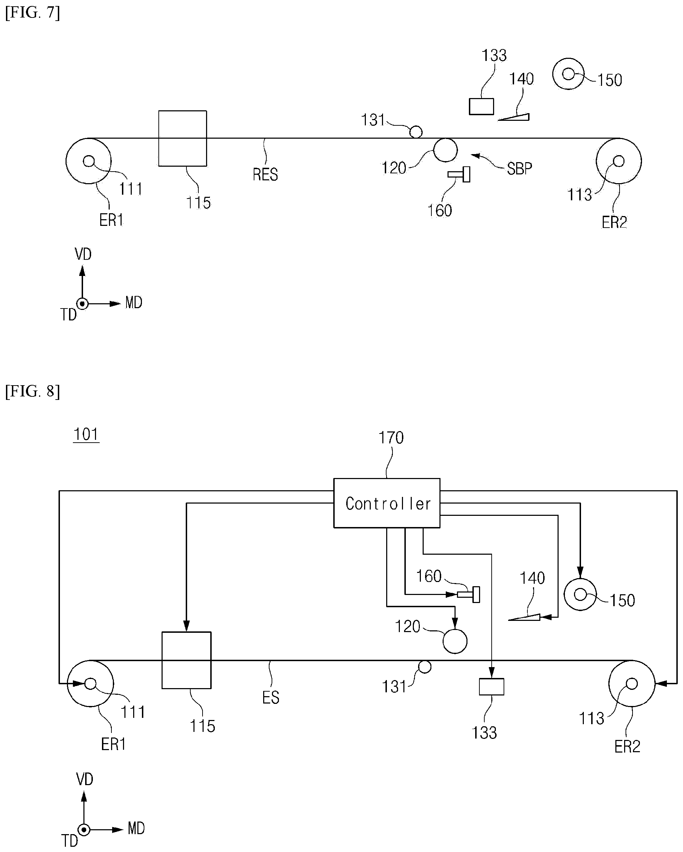

FIG. 8 illustrates a secondary battery manufacturing apparatus 101 according to exemplary embodiments.

Referring to FIG. 8, the secondary battery manufacturing apparatus 101 may include an unwinder 111, a rewinder 113, a processing mechanism 115, a dancer roll 120, a guide roll 131, a nip bar 133, a cutter 140, a scrap winder 150, a tape attacher 160, and a controller 170.

Referring to FIG. 8, the secondary battery manufacturing apparatus 101 is substantially the same as the secondary battery manufacturing apparatus 100, except that the dancer roll 120 is above an electrode sheet ES and a guide roll 131 and the nip bar 133 are below the electrode sheet ES. Accordingly, the dancer roll 120 may be moved downward to change a driving path of the electrode sheet ES. In addition, the nip bar 133 may be moved upward to fix the electrode sheet ES.

The present invention has been described above in more detail with reference to the drawings, the embodiments, etc. However, the configurations illustrated in the drawings or embodiments described in the present specification are only embodiments of the present invention and do not reflect all the technical ideas of the present invention and thus it should be understood that various equivalents and modifications that replace the configurations would have been made at the filing date of the present application.

## Claims

1. A secondary battery manufacturing apparatus comprising:
a dancer roll configured to change a driving path of an electrode sheet;
a cutter configured to cut the electrode sheet into first and second electrode sheets at a position adjacent to the dancer roll; and
a scrap winder configured to wind a defective part of the first electrode sheet.

2. The secondary battery manufacturing apparatus of claim 1, wherein the dancer roll is configured to move in a direction perpendicular to a moving direction of the electrode sheet.

3. The secondary battery manufacturing apparatus of claim 2, wherein the dancer roll is configured to move in a direction perpendicular to a transverse direction of the electrode sheet.

4. The secondary battery manufacturing apparatus of claim 1, wherein the dancer roll changes a path of the electrode sheet while tension of the electrode sheet is maintained.

5. The secondary battery manufacturing apparatus of claim 1, further comprising a nip bar configured to fix the electrode sheet.

6. The secondary battery manufacturing apparatus of claim 1, wherein the dancer roll is below the electrode sheet, and
the driving path of the electrode sheet is extended by the dancer roll.

7. The secondary battery manufacturing apparatus of claim 1, wherein the dancer roll is above the electrode sheet, and
the driving path of the electrode sheet is extended by the dancer roll.

8. The secondary battery manufacturing apparatus of claim 1, further comprising a tape attacher configured to connect the first electrode sheet and the second electrode sheet.

9. A secondary battery manufacturing method comprising:
moving a dancer roll to change a driving path of an electrode sheet, wherein the electrode sheet is unwound from a first electrode roll by an unwinder and wound into a second electrode roll by a rewinder;
cutting the electrode sheet to separate it into first and second electrode sheets, wherein the first electrode sheet is connected to the first electrode roll and the second electrode sheet is connected to the second electrode roll; and
winding a defective part of the first electrode sheet to scrap the defective part of the first electrode sheet.

10. The secondary battery manufacturing method of claim 9, wherein the driving path of the electrode sheet is extended through the moving of the dancer roll.

11. The secondary battery manufacturing method of claim 9, wherein the electrode sheet is unwound from the electrode roll during movement of the dancer roll.

12. The secondary battery manufacturing method of claim 9, further comprising fixing the electrode sheet by a nip bar before the cutting of the electrode sheet.

13. The secondary battery manufacturing method of claim 12, wherein the unwinding of the electrode sheet from the electrode roll is stopped before the fixing of the electrode sheet by the nip bar.

14. The secondary battery manufacturing method of claim 9, further comprising connecting the first electrode sheet and the second electrode sheet to provide a reconnected electrode sheet.

15. The secondary battery manufacturing method of claim 14, further comprising recovering a driving path of the reconnected electrode sheet.

16. The secondary battery manufacturing method of claim 14, wherein the dancer roll is moved from a standby position to a work position to change the driving path of the electrode sheet, and
the dancer roll is moved from the work position to the standby position to change a driving path of the reconnected electrode sheet.
